# EUROPÄISCHE PATENTANMELDUNG

(11) **EP 1 566 586 A1**
(43) Veröffentlichungstag der Anmeldung: **24.08.2005**
(21) Anmeldenummer: 04405097.9
(22) Anmeldetag: 20.02.2004
(51) Int. Cl.: F16L 3/10

(54) **Rohrschelle**

(71) Anmelder: Federnfabrik+Apparatebau Kaltbrunn AG, 8722 Kaltbrunn (CH)
(72) Erfinder: Rüegg, Anton, 8722 Kaltbrunn (CH); Müller, Anton, 8739 Rieden (CH); Gmür, Michael, 8425 Kaltbrunn (CH); Strässle, Roger, 9320 Arbon (CH)
(74) Vertreter: Welch, Andreas

(57) **Zusammenfassung**

Die vorliegende Erfindung betrifft eine Rohrschelle, umfassend zwei Halbschalen (1, 2), wobei auf einer Halbschale (1) eine Vorrichtung (4) zum Befestigen der Rohschelle angebracht ist und die beiden Halbschalen (1, 2) auf einer Seite gelenkartig (3) miteinander verbunden sind, dadurch gekennzeichnet, dass die freien Enden der Halbschalen (1, 2) über einen Rastverschluss miteinander verbindbar sind, welcher eine Rastung (7) mit zahnartigen Erhebungen (7a) an der einen Halbschale (2) und einen Rastkopf (6) an der anderen Halbschale (1) umfasst.

## Beschreibung

Die vorliegende Erfindung betrifft eine verbesserte Rohrschelle.

Rohrschellen werden beispielsweise zur Befestigung von Rohren wie Installationsrohren, Heizungsrohren oder Abwasserrohren oder von Leitungen eingesetzt. Derartige Rohrschellen sind hinreichend bekannt. Sie bestehen im wesentlichen aus zwei halbkreisförmigen Teilen, die als Tragteil und Verschlussteil bezeichnet werden. Die beiden Teile können miteinander zu einem Ring verbunden werden. Die Verbindung erfolgt herkömmlich zumindest an einer Seite mit einer Schraube.

Schraubenverbindungen weisen jedoch einige Nachteile auf. Das Anziehen und Lösen der Schraube ist mit hohem Zeit- und Kraftaufwand verbunden. In der Regel sind hierfür spezielle Werkzeuge erforderlich. Im Fall von vibrierenden Rohren besteht die Gefahr, dass sich aufgrund der Vibration die Schraubverbindung im Lauf der Zeit lockert.

Insbesondere im Fall von Rohren, bei welchen eine Schallisolation erforderlich ist, stellt eine Schraubverbindung eine ungünstige Lösung dar. Einerseits muss die Isolation an der Stelle, an welcher die Schraubverbindung angeordnet ist, ausgeschnitten werden. Dies beeinträchtigt die Isolationseigenschaften und erfordert einen zusätzlichen Arbeitsschritt. Andererseits besteht die Gefahr, dass die Schraube beim Schliessen der Verbindung zu fest angezogen wird. Dabei kann es zu einem Verspannen des inneren Isolationsmaterials, in der Regel Gummi, und somit zu einer Beeinträchtigung der Isolationseigenschaften kommen.

Im Stand der Technik ist bereits vereinzelt vorgeschlagen worden, bei Rohrschellen auf Schraubverbindungen zu verzichten. So ist in der CH-A-634 136 eine Rohrschelle vorgeschlagen, bei welcher die zwei Teile der Rohrschelle dadurch miteinander verbunden sind, dass eines der Teile hervorstehende Einheiten aufweist, welche in Ausnehmungen des anderen Teils eingeführt werden können.

In der DE-A-199 46 042 ist eine vier Einzelteilen umfassende Rohrschelle gezeigt. Diese vier Teile können miteinander zu einem Kreis verbunden werden. Die Verbindung wird auch hier dadurch realisiert, dass hervorstehende Einheiten eines Teils in Ausnehmungen eines anderen Teils eingeführt werden können.

Diese Verbindungen haben den Nachteil, dass sie nur zu einem Ring einer einzigen Grösse miteinander verbunden werden können. Diese Rohrschellen sind damit nur zur Befestigung eines Rohres mit einem bestimmten Durchmesser geeignet.

Es war die Aufgabe der vorliegenden Erfindung, eine Rohrschelle bereitzustellen, welche eine einfach verschliess- und lösbare Verbindung aufweist und mit welcher Rohre verschiedenen Durchmessers befestigt werden können, ohne dass die Nachteile einer Schraubverbindung in Kauf genommen werden müssen.

Die vorstehende Aufgabe wird durch eine Rohrschelle gemäss Anspruch 1 gelöst.

Die vorliegende Erfindung betrifft eine Rohrschelle, umfassend zwei Halbschalen, wobei auf einer Halbschale eine Vorrichtung zum Befestigen der Rohrschelle angebracht ist und die beiden Halbschalen auf einer Seite gelenkartig miteinander verbunden sind, dadurch gekennzeichnet, dass die freien Enden der Halbschalen über einen Rastverschluss miteinander verbindbar sind, welcher eine Rastung mit zahnartigen Erhebungen an der einen Halbschale und einen Rastkopf an der anderen Halbschale umfasst.

Die erfindungsgemässe Rohrschelle weist somit auf der einen Seite der Halbschalen eine Rastverbindung auf, welche auf einfache Weise ohne grosse Kraftanwendung von Hand geschlossen werden kann. Aufgrund der limitierten Kraft, die durch eine menschliche Hand aufgebracht werden kann, ist ein zu festes Schliessen dieser Verbindung und ein daraus resultierendes Verspannen einer gegebenenfalls vorhanden Isolation ausgeschlossen.

Zum Lösen der erfindungsgemässen Rastverbindung ist hingegen ein höherer Kraftaufwand beziehungsweise der Einsatz eines Werkzeugs wie beispielsweise eines Schraubenziehers erforderlich. Ein sicherer Verschluss der erfindungsgemässen Rohrschelle ist somit gewährleistet. Unbeabsichtigtes Lösen der Verbindung, beispielsweise durch Kinder, ist ausgeschlossen.

Die erfindungsgemässe Rohrschelle besteht wie die üblichen Rohrschellen aus dem Stand der Technik hauptsächlich aus zwei Halbschalen. Die Halbschalen können aus einem herkömmlich für Rohrschellen verwendeten Material gefertigt sein, beispielsweise aus einem Metall oder einer Metall-Legierung. Vorzugsweise sind die Halbschalen aus Stahl gefertigt. Für einen Einsatz unter Witterungseinfluss können die Halbschalen zusätzlich wetterbeständiger gemacht werden.

Die beiden Halbschalen sind auf einer Seite über ein Gelenk miteinander verbunden, d.h. die Halbschalen sind an dieser Stelle zueinander beweglich verbunden. Hierbei kann jede herkömmliche, dem Fachmann bekannte Gelenkverbindung verwendet werden. Erfindungsgemäss bevorzugt ist die Gelenkverbindung dadurch realisiert, dass in einer der Halbschalen mindestens eine Öffnung in der Nähe des Endes der Halbschale vorhanden ist. Durch diese Öffnung wird eine Lasche geführt, welche mit einem Ende der anderen Halbschale verbunden ist. Diese Lasche wird anschliessend, nachdem sie durch die Öffnung geführt worden ist, derart umgebogen, dass sie im geschlossenen Zustand der Rohrschelle nicht mehr aus der Öffnung herausgleiten kann. Dadurch sind die Halbschalen an diesen Enden dennoch beweglich miteinander verbunden. Erfindungsgemäss bevorzugt weist eine Halbschale zwei derartiger Öffnungen und die andere Halbschale zwei derartige Laschen auf, so dass die vorstehend beschriebene Verbindung zweifach realisiert ist.

Die vorstehend beschriebene Gelenkverbindung ermöglicht eine einfache Montage eines Rohrs oder einer Leitung, selbst wenn die Rohrschelle bereits mit einem externen Teil wie einem Mauerwerk verbunden ist. Die Gelenkverbindung erlaubt ein Wegklappen der einen Halbschale von der anderen Halbschale. Dadurch entsteht ein grosser Raum, in welchen ein Rohr oder eine Leitung problemlos in die Rohrschelle eingeführt werden kann. Anschliessend wird die erfindungsgemässe Rohrschelle vorzugsweise per Hand ohne grossen Kraftaufwand durch Schliessen der Rastverbindung an den freien Enden der Halbschalen geschlossen.

Gemäss einer besonders bevorzugten Ausführungsform der vorliegenden Erfindung sind die Halbschalen nicht wie bei herkömmlichen Rohrschellen aus dem Stand der Technik rund geformt. Vielmehr weisen die Halbschalen vorzugsweise eine zueinander gewinkelte Form (Polygonform) auf. Besonders bevorzugt sind die Halbschalen derart gewinkelt, dass sie im geschlossenen Zustand der Rohrschelle miteinander die Form eines Achtecks (Prismaform) ausbilden. Die Ecken des Polygons können hierbei auch abgerundet sein. Dies ermöglicht das sichere Befestigen vor allem von runden Rohren mit unterschiedlichen Durchmessern.

Es ist aber gemäss der vorliegenden Erfindung auch möglich, abgerundete Halbschalen zu verwenden.

Zur Verstärkung können die beiden Halbschalen der erfindungsgemässen Rohrschelle mit Sicken versehen werden.

An einer der beiden Halbschalen ist weiterhin eine Vorrichtung zum Befestigen der Rohschelle angebracht. Hierbei handelt es sich um eine herkömmlich bei Rohrschellen verwendete Vorrichtung, beispielsweise um einen Gewindeanschlusskopf wie eine Muffe. Erfindungsgemäss bevorzugt sind Muffen mit einer oder mehreren Gewindegrössen. Besonders bevorzugt sind Muffen mit 3 oder 4 Gewinden verschiedener Grösse. Vorzugsweise ist die Muffe an einer der Halbschalen angeschweisst oder verstemmt. Die Vorrichtung dient zum Befestigen der Rohrschelle an beispielsweise Mauerwerk wie eine Wand oder eine Decke.

Die beiden freien Enden der Halbschalen können wie vorstehend bereits beschrieben durch einen Rastverschluss miteinander verbunden werden. Dieser Rastverschluss umfasst einen Teil mit zahnartigen Erhebungen, welcher Bestandteil der einen Halbschale ist und nachstehend als Rastung bezeichnet wird, und einen Rastkopf, der Bestandteil der anderen Halbschale ist.

Die Rastung hat vorzugsweise an seinen beiden Aussenkanten jeweils eine Reihe von zahnartigen Erhebungen, welche vom Inneren der Rohrschelle weg gerichtet sind. Durch die Anzahl der Erhebungen und deren Abstand zueinander kann bestimmt werden, welche Durchmesser die erfindungsgemässe Rohrschelle abdecken kann. Erfindungsgemäss bevorzugt sind die zahnartigen Erhebungen jeweils etwa 1-3 mm, vorzugsweise etwa 1.5 mm voneinander entfernt.

Die Länge der Rastung und die Anordnung der zahnartigen Erhebungen ist so gewählt, dass mit den unterschiedlich grossen Typen der Rohrschellen Rohre oder Leitungen mit einem Durchmesser im Bereich von etwa 10 bis etwa 300 mm befestigt werden können. Die erfindungsgemässe Rohrschelle ist somit sehr variabel einsetzbar.

Der Rastverschluss umfasst weiterhin einen Rastkopf. Der Rastkopf nimmt im geschlossenen Zustand die Rastung auf. Der Rastkopf weist hierfür eine Öffnung auf, in welche die Rastung zum Verschliessen eingeführt werden kann. Sobald die Rastung in die Öffnung des Rastkopfes eingeführt worden ist, kann es ohne Hilfsmittel nur noch weiter in die Öffnung hinein bewegt werden.

Der Rastkopf weist weiterhin eine Rastfeder auf, welche in die zahnartigen Erhebungen der Rastung federnd arretiert, wenn die Rastung weit genug in den Rastkopf hineingedrückt wird. Dadurch wird der Rastverschluss geschlossen. Vorzugsweise befindet sich die Rastfeder am Ausgang der Öffnung im Rastkopf.

Sobald die Rastfeder in einer der zahnartigen Erhebungen federnd arretiert ist, kann die Rastung nicht mehr zurückgezogen werden. Ein weiteres Hineindrücken der Rastung ist jedoch möglich. Erfindungsgemäss bevorzugt wird das Hineindrücken der Rastung dadurch begrenzt, dass die Rastung und die Öffnung im Rastkopf eine geringere Breite aufweisen als die Halbschale, deren Bestandteil die Rastung ist. Somit kann zwar die Rastung vollständig, nicht jedoch das damit verbundene Ende der Halbschale in die Öffnung des Rastkopfes hineingeschoben werden.

Wenn die Rastfeder in eine der zahnartigen Erhebungen der Rastung federnd arretiert ist, kann der Rastverschluss nicht mehr problemlos geöffnet werden. Eine erhöhte Kraftanstrengung ist erforderlich, um durch Anheben der Rastfeder den Rastverschluss wieder zu lösen. Vorzugsweise ist hierfür ein Werkzeug wie beispielsweise ein Schraubenzieher zu verwenden. Der Rastverschluss sorgt somit für einen sicheren Verschluss der Rohrschelle gemäss der vorliegenden Erfindung. Insbesondere löst sich dieser Verschluss nicht aufgrund möglicher Vibrationen des damit befestigten Rohrs.

Gemäss einer bevorzugten Ausführungsform der vorliegenden Erfindung umfasst die Rohrschelle weiterhin eine Isolation, um beispielsweise eine Schalldämpfung zu erreichen.

Derartige Isolationen sind prinzipiell bekannt. Vorzugsweise ist die Isolation an den Halbschalen angebracht. Besonders bevorzugt umgreift die Isolation teilweise die Halbschalen. Dadurch wird ein sicherer Halt der Isolation sowie eine verbesserte Isolationswirkung erreicht. Weiterhin bevorzugt weist die Isolation in das Innere der Rohrschelle gerichtete Profilschienen auf. Wenn eine gewisse Beweglichkeit des Rohrs oder der Leitung innerhalb der Rohrschelle erwünscht ist, kann auf die Isolation ein Gleitmittel aufgebracht werden. Die Isolation unterstützt zudem das federnde Umschliessen des Rohrs in der Rohrschelle, da sie aus einem Material gefertigt ist, das beim Arretieren etwas nachgibt.

Die Isolation kann aus jedem Material gefertigt werden, welches die gewünschten isolierenden Eigenschaften bereitstellt. Beispielsweise seien Gummi oder Polymere mit schalldämpfender Wirkung genannt, wie sie auch im Automobilbereich eingesetzt werden.

Durch den Einsatz der erfindungsgemässen Rastung muss die Rohrisolation an dieser Stelle nicht wie bisher erforderlich ausgeschnitten werden.

Die vorliegende Erfindung wird nachstehend anhand eines nicht einschränkenden Beispiels unter Bezugnahme auf ebenfalls nicht einschränkende Zeichnungen näher beschrieben. Es zeigen:
- Fig. 1: eine Ansicht der erfindungsgemässen Rohrschelle im geöffneten Zustand
- Fig. 2: eine Ansicht der erfindungsgemässen Rohrschelle im geschlossenen Zustand
- Fig. 3: eine Ansicht der erfindungsgemässen Rohrschelle mit einer Isolations

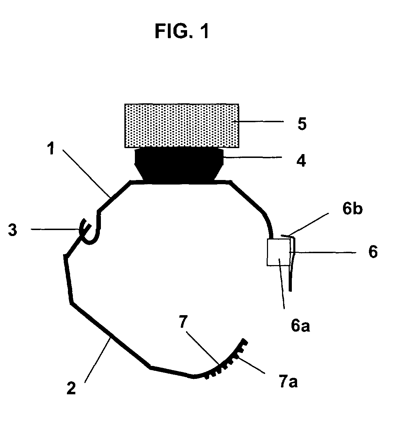

In Fig. 1 sind die beiden Halbschalen 1 und 2 über ein Gelenk 3 beweglich an einer Seite miteinander verbunden. An die Halbschale 1 ist eine Muffe 4 angeschweisst oder verstemmt. Das Muffenteil 5 kann abgeschraubt werden, um zur Befestigung der Rohrschelle eine andere Gewindegrösse verwenden zu können.

Am freien Ende der Halbschale 1 ist ein Rastkopf 6 mit einer Öffnung 6a und einer Rastfeder 6b angebracht. Am freien Ende der Halbschale ist eine Rastung 7 mit zahnartigen Erhebungen 7a jeweils an den Aussenkanten angebracht.

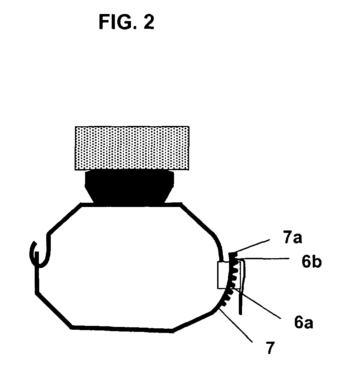

Fig. 2 zeigt die erfindungsgemässe Rastung im geschlossenen Zustand. Die Rastung 7 ist in die Öffnung 6a des Rastkopfes eingedrückt. Die Rastfeder 6b ist in eine der zahnartigen Erhebungen 7a der Rastung 7 arretiert.

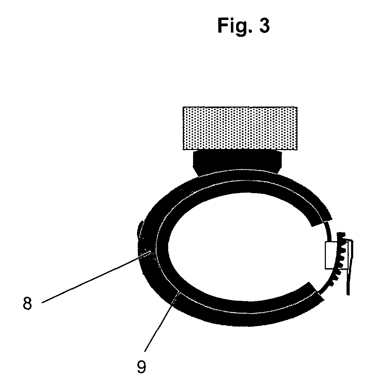

Fig. 3 zeigt eine Ausführungsform der erfindungsgemässen Rohrschelle, bei welcher auf die Halbschalen 1 und 2 eine Isolation 8 aus Gummi aufgebracht ist. Die Isolation 8 umgreift teilweise die Halbschalen 1 und 2 und weist in das Innere der Rohrschelle gerichtete Profilschienen 9 auf.

Die erfindungsgemäss Rohrschelle eignet sich besonders zum Befestigen von Bauteilen wie Rohren oder Leitungen.

## Patentansprüche

1. Rohrschelle, umfassend zwei Halbschalen (1, 2), wobei auf einer Halbschale (1) eine Vorrichtung (4) zum Befestigen der Rohschelle angebracht ist und die beiden Halbschalen (1, 2) auf einer Seite gelenkartig (3) miteinander verbunden sind, **dadurch gekennzeichnet, dass**
die freien Enden der Halbschalen (1, 2) über einen Rastverschluss miteinander verbindbar sind, welcher eine Rastung (7) mit zahnartigen Erhebungen (7a) an der einen Halbschale (2) und einen Rastkopf (6) an der anderen Halbschale (1) umfasst.

2. Rohrschelle nach Anspruch 1, **dadurch gekennzeichnet, dass** der Rastkopf (6) eine Öffnung (6a), durch welche die Rastung (7) mit den zahnartigen Erhebungen (7a) geführt werden kann, und eine in die zahnartigen Erhebungen (7a) der Rastung (7) eingreifende Rastfeder (6b) aufweist.

3. Rohrschelle nach Anspruch 1 oder 2, **dadurch gekennzeichnet, dass** die Halbschalen (1, 2) jeweils eine in Richtung zu der andern Halbschale abgewinkelte Form aufweisen.

4. Rohrschelle nach Anspruch 3, **dadurch gekennzeichnet, dass** die Halbschalen (1, 2) im auf beiden Seiten miteinander verbundenen Zustand eine Polygonform, vorzugsweise eine im wesentlichen achteckige Form ausbilden.

5. Rohrschelle nach einem der Ansprüche 1 bis 4, **dadurch gekennzeichnet, dass** auf den beiden Halbschalen (1, 2) zusätzlich eine Isolation (8) vorhanden ist.

6. Rohrschelle nach Anspruch 5, **dadurch gekennzeichnet, dass** die Isolation (8) die Halbschalen (1, 2) teilweise umgreift und in das Innere der Rohrschelle gerichtete Profilschienen (9) aufweist.

7. Rohrschelle nach einem der Ansprüche 1 bis 6, **dadurch gekennzeichnet, dass** die Vorrichtung (4) zum Befestigen der Rohschelle eine Muffe mit einer oder mehreren Gewindegrössen ist.

8. Rohrschelle nach einem der Ansprüche 1 bis 7, **dadurch gekennzeichnet, dass** die Gelenkverbindung (3) der Halbschalen **dadurch** realisiert ist, dass durch mindestens eine Öffnung, welche am Ende einer Halbschale vorhanden ist, mindestens eine am Ende der anderen Halbschale befindliche Lasche geführt und die beiden Teile durch Umbiegen der Lasche gelenkig miteinander verbunden sind.

9. Rohrschelle nach einem der Ansprüche 1 bis 8, **dadurch gekennzeichnet, dass** die beiden Halbschalen der erfindungsgemässen Rohrschelle mit Sicken versehen sind.

10. Verwendung einer Rohrschelle gemäss einem der Ansprüche 1 bis 9 zum Befestigen von Bauteilen, insbesondere von Rohren oder Leitungen.
